# EUROPEAN PATENT APPLICATION

(11) **EP 4 550 360 A1**
(43) Date of publication of application: **07.05.2025**
(21) Application number: 24209217.9
(22) Date of filing: 28.10.2024
(51) Int. Cl.: H01B 3/30, H01B 7/02, H02K 3/30

(54) **ELECTRICALLY INSULATED CONDUCTORS AND METHODS FOR ELECTRICALLY INSULATING CONDUCTORS**

(30) Priority: 30.10.2023 US 202363546473 P; 16.11.2023 US 202363599865 P; 25.10.2024 US 202418927191
(71) Applicant: DuPont Electronics, Inc., Wilmington, Delaware 19805 (US)
(72) Inventor: BAILONI, Martino, Wilmington, 19805 (US); SHTYKA, Olga, Wilmington, 19805 (US); GONZALEZ, Rosa I., Wilmington, 19805 (US)
(74) Representative: Lind Edlund Kenamets Intellectual Property AB

(57) **Abstract**

Disclosed herein are exemplary embodiments of electrically insulated conductors and exemplary methods for electrically insulating conductors, such that the resulting electrically insulated conductors are resistant to partial discharge (PD), and thereby suitable for PD resistant design schemes (*e.g.,* 800 V or above electric motors, *etc*.)*.* An exemplary method includes applying an enamel coating along an electrical conductor, wrapping an electrically insulative tape around the enameled electrical conductor, and heating sealing the tape-wrapped, enameled electrical conductor to help ensure good adhesion of the electrically insulative tape to the enamel coating. The electrically insulative tape comprises polyimide and a sufficient amount of an electrically insulative, corona resistant filler for PD resistance. The tape-wrapped, enameled electrical conductor is resistant to partial discharge (PD), *e.g.,* suitable for use in a stator winding of an 800 volt or above electric motor, *etc.*

## Description

### FIELD

The present disclosure generally relates to electrically insulated conductors and methods for electrically insulating conductors, such that the electrically insulated conductors are resistant to partial discharge (PD), and thereby suitable for PD resistant design schemes (*e.g*., electric motors operating at 800 V or above, *etc.*)*.*

### BACKGROUND

This section provides background information related to the present disclosure which is not necessarily prior art.

Electric vehicles are commonly used today, which use is expected to increase considerably over time. The electric motors used in electric vehicles may be driven by pulse width modulated (PWM) inverters.

### DETAILED DESCRIPTION

Example embodiments will now be described more fully with reference to the accompanying drawings.

Hairpin winding technology is becoming more common in the design of electric motor (e-motors) for electrical vehicles, especially for traction motor applications requiring high power density. Another common design shift in e-motors is an increase in the system voltage from the current 400 V standard to 800 V. An increase to 800 V places more stress on the wire insulation materials around the copper hairpin conductors inside the e-motor. And a failure in the wire insulation material used to insulate the copper conductor to prevent short-outs to ground in the e-motor will render the entire e-motor useless, which cannot be repaired.

A particular stress potentially experienced by wire insulation materials in an 800 V motor is so-called "partial discharge" ("PD"). Partial discharge is a phenomenon wherein, under certain conditions, the wire insulation material is continuously degraded by the effect of the applied electric field until the insulation eventually fails and the e-motor shorts out. Partial discharge is not a problem with insulation materials commonly used in 400 V e-motors and can be avoided in 800 V e-motors as part of a so-called "PD free" motor design scheme. In the PD free design approach, the thickness of the wire insulation material is increased beyond a certain thickness threshold value that is derived from an empirical formula known to the industry, and which avoids the PD phenomenon from taking place. A drawback of increasing the thickness of wire insulation is that the amount of copper that can be placed into an e-motor (commonly referred to as the copper fill factor) is reduced, which increases the electrical resistance of the copper wire inside the e-motor, thus reducing the performance of the e-motor. The safer PD free design of the e-motor is thus directly resulting in reduced motor performance.

A competing design approach for wire insulation in 800 V e-motors is the so-called "PD resistant" design. In a PD resistant design approach, the wire insulation material is kept thinner than is necessary to avoid the partial discharge phenomenon from occurring inside the e-motor, which allows a higher copper fill factor. In order to cope with the partial discharge phenomenon that is now occurring within the e-motor, the insulation material is made resistant to partial discharge, which is why this design approach is commonly referred to as a "PD resistant" design. Resistance of a wire insulation material to PD is commonly achieved by filling a part of the wire insulation material (which typically is composed of organic polymers) with inorganic fillers.

As further recognized herein, the industry standard for wire insulation in 400 V e-motors is currently a varnish/enamel organic polymer that is coated on rectangular shaped copper wires (less common are round copper wires or aluminum as the conductor material) before the rectangular shaped copper wires are inserted into the e-motor. Increasing the system voltage of an electrical vehicle from 400 V to 800 V requires application of a thicker insulation material around each wire within the e-motor to keep up with the increased electrical insulation requirements and to stay in the PD free design regime. But the use of thicker enamel coatings (*i.e.,* "grade 3", enamel thickness of 100 µm or more) has limitations in its manufacturing: First, thickness uniformity of the enamel coating around the wire is difficult to achieve with enameled rectangular copper wire as thickness increases (especially around the corners or edges of the wire if the wire shows small corner radii). Secondly, residual solvent content is a problem common to thick grades of enamel. Solvent used during the enamel manufacturing process (*e.g*., N,N-dimethylacetamide (DMAc) or N-Methylpyrrolidone NMP) has come under increasing scrutiny in parts of the world such as Europe, with a strong push from regulatory bodies to eliminate these solvents in the European Union (EU). Additionally, mechanical stress exerted on the enamel coating during the forming of the enameled wire (to produce hairpins which are then inserted into the e-motor) can lead to pinhole or crack issues with the enamel, leading to electrical failure. Moreover, the temperatures during the hairpin welding process (which connects individual hairpins in a motor into a contiguous electrical circuit) can affect the wire insulation material locally, creating a weakness in the enamel. For example, the thermal exposure during welding would make enamel more brittle and liable to electrical failure.

An alternative to reaching a higher insulation thickness around a copper wire is the use of an extrusion process (instead of the coating process that uses an enamel). In this process, a polymer (commonly polyaryletherketone (PAEK) with a glass transition temperature of approximately 140 °C to 160 °C) is extruded onto the wire, which allows formation of a continuous insulation layer per side of 200 µm or more thickness sufficient to remain in the PD free design regime. To achieve better adhesion of PAEK to the copper wire, a thin primer layer such as an enamel layer can be first coated on the wire and then the PAEK polymer extruded on top of it (see, for example, U.S. Patent No. 9,224,523 and U.S. Patent No. 9,536,636, which are incorporated herein by reference). Common enamel types such as polyimide, polyamide-imide, or polyamide-imide/polyester-imide may be used as primers. A drawback of using PAEK-based insulations is that their thermal transition point (more specifically: a glass transition point) is typically below the operating temperature of e-motors (commonly 180 °C to 200 °C), which might create potential issues regarding long-term reliability of this type of wire insulation material.

A third approach is to wrap copper wire with a tape. This results in an insulation that has edges on the surfaces instead of a smooth surface. The tape can be made of a variety of materials, but typically a polyimide-based tape is used for applications in harsh environments such as e-motors. The polyimide tape can contain an inorganic filler to make it PD resistant and can contain one or more fluoropolymer based layers on the surface(s), which act as an adhesive to provide adhesion to the copper wire. A drawback of using a tape insulation is that delamination, abrasion, and scraping of the tape insulation can occur when the wire is bent to produce hairpins, thus fully piercing the tape insulation and creating an electrical failure.

After recognizing the above, exemplary embodiments were developed and/or are disclosed herein in which wires (broadly, electrical conductors) are insulated based on a partial discharge (PD) resistant design approach such that the insulated wires are usable in 800 V or above e-motors. Exemplary embodiments disclosed herein use a double-layer approach for a wire insulation by combining an enamel coating underneath a polyimide-containing tape wrap, whereby the electrically insulated wires are PD resistant and usable for 800 V or above applications.

In exemplary embodiments, an enamel coating (*e.g.*, up to 90 µm thick per side on average per side, but more preferably in an average thickness range of 50 µm to 70 µm, *etc.*) is applied to a copper wire (broadly, an electrical conductor) and cured. Then, a polyimide-containing tape is wrapped around the enameled copper wire with an overlap value (*e.g*., ranging from 15% to 70%, *etc.*) for the tape, and heat sealed to ensure good adhesion of the tape to the enamel. The polyimide-containing tape includes a sufficient amount (*e.g*., 17 weight percent (wt%), *etc.*) of an electrically insulative, corona resistant composite filler (*e.g.,* aluminum oxide, *etc.*) in the polyimide polymer to make the tape PD resistant.

An advantage of this double-layer approach is that the resulting wire insulation material has an overall average thickness less than 170 µm per side, which leads to a theoretically higher copper fill factor compared to extruded materials based on PAEK if the same copper conductor dimensions are used. In addition, the resulting wire insulation material can withstand partial discharge (PD) phenomena, making it suitable for PD resistant design schemes, *e.g.,* for 800 V or above e-motors, *etc.* Compared to using just enamel on a copper wire, this double-layer approach is able to achieve a uniform insulation thickness around the copper wire and less processing solvents are required during the manufacturing process of the insulated copper wire. Compared to a tape-only insulation system, this double-layer approach includes enamel that is still present underneath the tape wrap and still provides electrical insulation in cases were delamination or scrapes have occurred to the applied tape.

### Enamel Coating Process

A description of the enamel coating process that is used in exemplary embodiments will now be provided. In exemplary embodiments, the electrical conductors that can be used in the context of the enamel coating process are primarily composed of either copper (preferably copper classified as CDA 10100, 10200 and 110000) or aluminum. Other conductors include alloys of copper with other metals, stainless steel, and graphite. The electrical conductor preferably has a rectangular shape with a defined corner radius of 1 millimeter (mm) or less and with dimensions of approximately 1 to 6 millimeters by 1.5 to 20 millimeters, and properties as described in ASTM B250, ASTM B48, ANSI/NEMA MW 1000, and/or IEC 60317. But electrical conductors having other shapes (*e.g.,* round, square, stranded, litz, hollow, *etc.*) may also be used in exemplary embodiments. Additional dimensions for electrical conductors with rectangular shapes used in 800 V or above bus bar applications include 1 to 20 mm by 20 to 200 mm with corner radii 0.1 to 0.3 mm.

In exemplary embodiments, enamel is applied to a bare rectangular copper wire, such as via a process as disclosed in U.S. Patent No. 2,345,390, U.S. Patent No. 9,543,058, and/or U.S. Patent No. 10,020,092. It is known in the art that careful selection of processing parameters such as line speed, curing temperature, line tension, absolute humidity and temperature of the surrounding atmosphere, applied wet coating thickness, form and shape of the coating dies, residual solvent content, and viscosity of the applied coating solution can influence the properties of the cured enamel. For example, degree of cure, adhesion, coating thickness uniformity and concentricity, abrasion and scrape resistance, resistance to organic solvents and moisture, hardness of the cured enamel, *etc.* are all directly impacted by the careful selection of these processing parameters. In one exemplary embodiment, the average thickness of the enamel per side is less than 90 micrometers. In other exemplary embodiment, the preferred average thickness range of the enamel per side is 30 to 80 micrometers.

In exemplary embodiments, the chemical composition of the enamel is generally described as either a polyamide-imide (as, for example, described in DOI 10.1002/mame.200700365), or the Applied Plastics Engineering Handbook (2011), Part 1, Chapter 2, or Plastics in Medical Devices (2010), Chapter 8), polyimide (formally derived from monomers as disclosed hereinafter the section titled "Polyimide Film Production"), polyester-imide (as, for example, described in DOI 10.1002/mame.200700363), or combinations thereof. For example, the enamel coating may be a single chemical composition. Or, for example, the enamel coating may include multiple layers of different compositions coated on top of one another. The thickness of each layer in such a case is not limited by the presence of other layers. The preferred enamel composition is a polyamide-imide, more specifically a polymer formally derived from a di-amine such as 4,4'-methylenedianiline and an anhydride such as trimellitic anhydride. Other diamines formally derived from monomers as disclosed hereinafter the section titled "Polyimide Film Production" may also be suitable for use in in polyamide-imide enamel compositions, either by themselves or as part of a mixture of two or more di-amines. Additional layers may be present that improve adhesion or improved scrape abrasion resistance or other properties relevant to this application. The surface of the wire bearing the enamel coating is preferably free of any lubricant or other layer that seeks to decrease the surface energy of the enamel coating.

In exemplary embodiments, the surface of the enamel coating may be treated in ways to increase adhesion to a layer that is subsequently placed on top of the enamel surface, such as a tape material. Suitable ways to improve adhesion include methods as disclosed hereinafter in subsequent sections, and may include plasma or corona treatments, but are not limited to these.

The electrical conductor fully covered in enamel may have certain desirable properties. Desired properties include (a) a visual appearance of the enamel that is free of defects such as blisters or bubbles, (b) a thermal class rating of 200 °C or greater when the enamel is applied on copper, (c) a residual solvent content of 5 wt% or less, (d) a breakdown voltage value of at least 2 kV or more and which is retained to at least 50% of the initial value after elongation of the conductor by at least 5%, bending, chemical exposure or thermal exposure, (e) no visual cracking when bent edgewise or flatwise by a 180° turn around a mandrel having diameter two times the width of the conductor, (f) no visual cracking when exposed to at least 200 °C for at least 30 minutes or when additionally first bent flatwise or edgewise or when additionally first elongated to at least 10%, (g) an elongation to break of at least 30%, (h) a loss of adhesion of the enamel of less than one time the width of the conductor after elongation by at least 20% or when additionally first thermally aged for at least 30 minutes at at least 150 °C, (i) a certain static friction coefficient, (j) a certain partial discharge inception voltage at ambient conditions at a threshold of 20 picocoulomb of 700 V or greater, and (k) a certain abrasion/scrape resistance. The testing of these properties may occur according to standard procedures known to the industry such as IEC 60851, ASTM, or ANSI/NEMA MW 1000.

### Polyimide Film Production

In exemplary embodiments, the tape is composed of a polyimide layer of nominal thickness (*e.g.,* 0.75 mils, *etc.*) and a fluoropolymer layer of nominal thickness (*e.g.,* 0.5 mils, *etc.*)*.* The chemical composition of the polyimide layer is preferably a co-polymer of 4,4'-Oxydianiline and Pyromellitic dianhydride and containing a predetermined weight percentage (*e.g.,* 17 wt%, *etc.*) of a homogeneously dispersed inorganic filler (*e.g.,* aluminum oxide, *etc.*)*.* The inorganic filler is surface-treated with a silane, and a dispersant is used as a processing aid for uniform dispersion of the filler during the film-forming manufacturing steps. In an example embodiment, the particle size distribution of the aluminum oxide filler is d99 of 0.5 µm or less as determined by a LA-960 Horiba Particle Analyzer. The chemical composition of the fluoropolymer layer is preferably a fluorinated ethylene propylene copolymer (FEP).

More detailed descriptions are provided below of the polyimide composition, fluoropolymer composition, and film production according to exemplary embodiments.

### Diamine Monomers Suitable for Producing the Polyimide Layer

In exemplary embodiments, any number of suitable diamines can be used for the monomers to form the polymer backbone. Aromatic diamines can include fluorinated aromatic diamines, such as 2,2'-bis(trifluoromethyl)benzidine (TFMB), 2,2'-bis-(4-aminophenyl)hexafluoropropane, 4,4'-diamino-2,2'-trifluoromethyldiphenyloxide, 3,3'-diamino-5,5'-trifluoromethyldiphenyloxide, 9,9'-bis(4-aminophenyl)fluorene, 4,4'-trifluoromethyl-2,2'-diaminobiphenyl, 4,4'-oxy-bis[2-trifluoromethyl)benzeneamine] (1,2,4-OBABTF), 4,4'-oxy-bis[3-trifluoromethyl)benzeneamine], 4,4'-thiobis[(2-trifluoromethyl)benzeneamine], 4,4'-thiobis[(3-trifluoromethyl)benzeneamine], 4,4'-sulfoxyl-bis[(2-trifluoromethyl)benzeneamine, 4,4'-sulfoxyl-bis[(3-trifluoromethyl)benzeneamine], 4,4'-keto-bis[(2-trifluoromethyl)benzeneamine], 1,1-bis[4'-(4"-amino-2"-trifluoromethylphenoxy)phenyl]cyclopentane, 1,1-bis[4'-(4"- amino-2"-trifluoromethylphenoxy)phenyl]cyclohexane, 2-trifluoromethyl-4,4'-diaminodiphenylether; 1,4-(2'-trifluoromethyl-4',4"-diaminodiphenoxy)benzene, 1,4-bis(4'-aminophenoxy)-2- [(3',5'-ditrifluoromethyl)phenyl]benzene (6F-amine), 1,4- bis[2'-cyano-3'("4-amino phenoxy)phenoxy]-2-[(3',5'-ditrifluoro-methyl)phenyl]benzene (6FC-diamine), 3,5-diamino-4-methyl-2',3',5'5',6'-tetrafluoro-4'-tri-fluoromethyldiphenyloxide, 2,2-bis[4(4-aminophenoxy)phenyl]phthalein-3',5'-bis(trifluoromethyl)anilide (6FADAP) and 3,3',5,5'-tetrafluoro-4,4'-diamino-diphenylmethane (TFDAM).

Other useful aromatic diamines can include 4,4'-diaminobiphenyl, 4,4"-diaminoterphenyl, 4,4'-diaminobenzanilide (DABA), 4,4'-diaminophenylbenzoate, 4,4'-diaminobenzophenone, 4,4'-diaminodiphenylmethane (MDA), 4,4'-diaminodiphenylsulfide, 4,4'-diaminodiphenylsulfone, 3,3'-diaminodiphenylsulfone, bis[4-(4-aminophenoxy)phenyl]sulfone (BAPS), 4,4'-bis(4-aminophenoxy)biphenyl (BAPB), 4,4'-diaminodiphenylether (ODA), 3,4'-diaminodiphenylether, 4,4'-isopropylidenedianiline, 2,2'-bis(3-aminophenyl)propane, 2,2-bis(4-aminophenyl)propane, 3,3'-dimethyl-4,4'-diaminobiphenyl, 4-aminophenyl-3-aminobenzoate, bis(p-beta-amino-t-butylphenyl)ether, p-bis-2-(2-methyl-4-aminopentyl)benzene. In exemplary embodiments, the diamine is a triamine, such as N,N-bis(4-aminophenyl)-n-butylamine, N,N-bis(4-aminophenyl)methylamine or N,N-bis(4-aminophenyl)aniline.

Other useful aromatic diamines can include 1,2-bis(4-aminophenoxy)benzene, 1,3-bis(4-aminophenoxy)benzene (RODA), 1,2-bis(3-aminophenoxy)benzene, 1,3-bis(3-aminophenoxy)benzene, 1-(4-aminophenoxy)-3 -(3 -aminophenoxy)benzene, 1,4-bis-(4-aminophenoxy)benzene, 1,4-bis(3-aminophenoxy)benzene, 1-(4-aminophenoxy)-4-(3-aminophenoxy)benzene, 2,2-bis(4-[4-aminophenoxy]phenyl)propane (BAPP), 2,2'-bis(4-phenoxyaniline)isopropylidene.

Other useful aromatic diamines can include p-phenylenediamine (PPD), m-phenylenediamine (MPD), 2,5-dimethyl-1,4-diaminobenzene, 2,5-dimethyl-1,4-phenylenediamine (DPX), 1,4-naphthalenediamine,1,5-naphthalenediamine, 1,5-diaminonaphthalene, m-xylylenediamine, and p-xylylenediamine.

In exemplary embodiments, additional useful diamines for forming the polyimide can include an aliphatic diamine, such as 1,2-diaminoethane, 1,6-diaminohexane (HMD), 1,4-diaminobutane, 1,5 diaminopentane, 1,7-diaminoheptane, 1,8-diaminooctane, 1,9-diaminononane, 1,10-diaminodecane (DMD), 1,11-diaminoundecane, 1,12-diaminododecane (DDD), 1,16-hexadecamethylenediamine, 1,3-bis(3-aminopropyl)-tetramethyldisiloxane, trans-1,4-diaminocyclohexane (CHDA), isophoronediamine (IPDA), bicyclo[2.2.2]octane-1,4-diamine and combinations thereof. Other aliphatic diamines suitable for practicing the invention include those having six to twelve carbon atoms or a combination of longer chain and shorter chain diamines so long as both developability and flexibility of the polymer are maintained. Long chain aliphatic diamines may increase flexibility.

Other useful additional diamines for forming the polyimide can include an alicyclic diamine (can be fully or partially saturated), such as a cyclobutane diamine (*e.g.,* cis- and trans-1,3-diaminocyclobutane, 6-amino-3-azaspiro[3.3]heptane, and 3,6-diaminospiro[3.3]heptane), bicyclo[2.2.1]heptane-1,4-diamine, isophoronediamine, and bicyclo[2.2.2]octane-1,4-diamine. Other alicyclic diamines can include cis-1,4-cyclohexanediamine, trans-1,4-cyclohexanediamine, 1,4-bis(aminomethyl)cyclohexane, 4,4'-methylenebis(cyclohexylamine), 4,4'-methylenebis(2-methyl-cyclohexylamine), bis(aminomethyl)norbornane.

### Dianhydrides Monomers Suitable for Producing the Polyimide Layer

In exemplary embodiments, any number of suitable dianhydrides can be used for the monomers to form the polymer backbone. The dianhydrides can be used in their tetra-acid form (or as mono, di, tri, or tetra esters of the tetra acid), or as their diester acid halides (chlorides). However, in some exemplary embodiments, the dianhydride form can be preferred, because it is generally more reactive than the acid or the ester.

Examples of suitable aromatic dianhydrides include 3,3',4,4'-biphenyltetracarboxylic dianhydride (BPDA), 2-(3',4'-dicarboxyphenyl)-5,6-dicarboxybenzimidazole dianhydride, 2-(3',4'-dicarboxyphenyl)-5,6-dicarboxybenzoxazole dianhydride, 2-(3',4'-dicarboxyphenyl)-5,6-dicarboxybenzothiazole dianhydride, 2,2',3,3'-benzophenonetetracarboxylic dianhydride, 2,3,3',4'-benzophenonetetracarboxylic dianhydride, 3,3',4,4'-benzophenonetetracarboxylic dianhydride (BTDA), 2,2',3,3'-biphenyltetracarboxylic dianhydride, 2,3,3',4'-biphenyltetracarboxylic dianhydride, 4,4'-thio-diphthalic anhydride, bis (3,4-dicarboxyphenyl)sulfone dianhydride, bis(3,4-dicarboxyphenyl)sulfoxide dianhydride (DSDA), bis(3,4-dicarboxyphenyloxadiazole-1,3,4)-p-phenylene dianhydride, bis(3,4-dicarboxyphenyl)-2,5-oxadiazole-1,3,4-dianhydride, bis(3',4'-dicarboxydiphenylether)-2,5-oxadiazole-1,3,4-dianhydride, 4,4'-oxydiphthalic anhydride (ODPA), bis(3,4-dicarboxyphenyl)thioether dianhydride, bisphenol A dianhydride (BPADA), bisphenol S dianhydride, bis-1,3-isobenzofurandione, 1,4-bis(4,4'-oxyphthalic anhydride)benzene, bis(3,4-dicarboxyphenyl)methane dianhydride, perylene-3,4,9,10-tetracarboxylic dianhydride, 1,3-bis-(4,4'-oxydiphthalic anhydride)benzene, 2,2-bis(3,4-dicarboxyphenyl)propane dianhydride, 4,4'-(hexafluoroisopropylidene)diphthalic anhydride (6FDA) and 9,9-bis(trifluoromethyl)-2,3,6,7-xanthenetetracarboxylic dianhydride.

In exemplary embodiments, additional dianhydrides for forming the polyimide can include 1,2,5,6-naphthalenetetracarboxylic dianhydride, 1,4,5,8-naphthalenetetracarboxylic dianhydride, 2,3,6,7-naphthalenetetracarboxylic dianhydride, bicyclo-[2,2,2]-octen-(7)-2,3,5,6-tetracarboxylic-2,3,5,6-dianhydride, cyclopentadienyltetracarboxylic dianhydride, ethylenetetracarboxylic dianhydride, pyromellitic dianhydride (PMDA), tetrahydrofurantetracarboxylic dianhydride, 2,6-dichloronaphthalene-1,4,5,8-tetracarboxylic dianhydride, 2,7-dichloronaphthalene-1,4,5,8-tetracarboxylic dianhydride, 2,3,6,7-tetrachloronaphthalene-1,4,5,8-tetracarboxylic dianhydride, phenanthrene-1,8,9,10-tetracarboxylic dianhydride, pyrazine-2,3,5,6-tetracarboxylic dianhydride, benzene-1,2,3,4-tetracarboxylic dianhydride and thiophene-2,3,4,5-tetracarboxylic dianhydride.

In exemplary embodiments, additional dianhydrides for forming the polyimide can include an alicyclic dianhydride, such as cyclobutane-1,2,3,4-tetracarboxylic diandydride (CBDA), 1,2,4,5-cyclohexanetetracarboxylic dianhydride, 1,2,3,4-cyclohexanetetracarboxylic dianhydride, 1,2,3,4-tetramethyl-1,2,3,4-cyclobutanetetracarboxylic dianhydride, 1,2,3,4-cyclopentanetetracarboxylic dianhydride (CPDA), hexahydro-4,8-ethano-1H,3H-benzo[1,2-c:4,5-c']difuran-1,3,5,7-tetrone (BODA), 3-(carboxymethyl)-1,2,4-cyclopentanetricarboxylic 1,4:2,3-dianhydride (TCA), and meso-butane-1,2,3,4-tetracarboxylic dianhydride.

In exemplary embodiments, a polyimide is derived from 50 mole% pyromellitic dianhydride (PMDA) and 50 mole% 4,4'-diaminodiphenylether (ODA). In exemplary embodiments, a polyimide can have a weight-average molecular weight (Mw) of 100,000 daltons or more, 150,000 daltons or more, 200,000 daltons or more, or 250,000 daltons or more.

### Imidization Catalysts

In exemplary embodiments, an imidization catalyst (sometimes called an "imidization accelerator") can be used as a conversion chemical that can help lower the imidization temperature for forming the polyimide and shorten the imidization time. The polyamic acid casting solutions of the present invention comprises both a polyamic acid solution combined with some amount of conversion chemicals. The conversion chemicals found to be useful in the present invention include, but are not limited to, (i) one or more dehydrating agents and/or co-catalysts, such as, aliphatic acid anhydrides (acetic anhydride, trifluoroacetic anhydride, propionic anhydride, monochloroacetic anhydride, bromo adipic anhydride, *etc*.) and aromatic acid anhydrides; and (ii) one or more imidization catalysts, such as, aliphatic tertiary amines (triethylamine, *etc.*), aromatic tertiary amines (dimethylaniline, N,N-dimethyl benzylamine, *etc.*) and heterocyclic tertiary amines (pyridine, alpha-, beta-, gamma-picoline, 3,5-lutidine, 3,4-lutidene, isoquinoilne, *etc.*) and guanidines (*e.g.* tetramethylguanidine). In exemplary embodiments, an imidization catalyst does not include a diazole. Other useful dehydrating agents can include diacetyl oxide, butyryl oxide, benzoyl oxide, 1,3-dichlorohexyl carbodiimide, N, N-dicyclohexyl carbodiimide, benzenesulfonyl chloride, thionyl chloride and phosphorus pentachloride. In some embodiments, the dehydrating agent can also act as a catalyst to enhance the reaction kinetics for the imidization. The anhydride dehydrating material is typically used in a slight molar excess of the amount of amide acid groups present in the polyamic acid solution. In exemplary embodiments, the amount of dehydrating agent used is typically about 2.0 to 4.0 moles per equivalent of the polyamic acid formula unit. Generally, a comparable amount of tertiary amine catalyst is used. The ratio of these catalysts and their concentration in the polyamic acid solution will influence imidization kinetics and the film properties. Polyimide films having substantially chemically converted polyimide can have imidization catalysts present in the polyimide film in an amount in the range of from 1 part per billion (ppb) to 1 wt%, from 10 ppb to 0.1 wt%, or from 100 ppb to 0.01 wt%.

### Corona Resistant Composite Fillers

In exemplary embodiments, the polyimide film comprises an electrically insulative, corona resistant composite filler.

In exemplary embodiments, a corona resistant composite filler can have an organic component and an inorganic ceramic oxide component, wherein a weight ratio of the organic component to the inorganic ceramic oxide component is from 0.01:1 to 1:1. In some exemplary embodiments, the weight ratio of the organic component to the inorganic ceramic oxide component can be in a range between (and optionally including) any two of the following numbers: 0.01:1, 0.05:1, 0.1:1, 0.2:1, 0.3:1, 0.4:1, 0.5:1, 0.6:1, 0.7:1, 0.8:1, 0.9:1 and 1:1. In exemplary embodiments, at least a portion of the organic component can include an organo-siloxane moiety or an organo-metaloxane moiety (*e.g*., organozirconate, organotitanate, organoaluminate).

In exemplary embodiments, the fillers have an inorganic ceramic oxide component, such as ceramic oxides of Al, V, Cr, Mn, Fe, Co, Ni, Cu, Zn, Ge, Zr, Nb, Mo, Sn, Sb, Ta, W, Pb or Ce. In exemplary embodiments, the inorganic ceramic oxide component can include silica, alumina, titania, zirconia, iron, calcium, or mixtures thereof. In exemplary embodiments, the inorganic ceramic oxide component includes silica, alumina or a mixture thereof. In exemplary embodiments, the inorganic ceramic oxide component is alumina.

In exemplary embodiments, the organic component of the corona resistant composite filler material is chosen primarily to provide or improve dispersability of the corona resistant composite filler material into a particular solvated polymer matrix or polymer matrix precursor. In some embodiments, the organic component of the corona resistant composite filler material is chosen to reduce the moisture absorption on the inorganic ceramic oxide component. Ordinary skill and experimentation may be necessary in optimizing the organic component for any particular solvent system selected. In some exemplary embodiments, the organo-siloxane moiety is n-octyl silane, or any of its structural isomers. In some embodiments, the corona resistant composite filler is an inorganic ceramic oxide without an organic component. In other exemplary embodiments, the organic component is a coating on the inorganic ceramic oxide component. The organic component may or may not cover the entire surface of the inorganic ceramic oxide component.

In exemplary embodiments, the electrically insulative, corona resistant composite filler is present in an amount between and including any two of the following numbers: 5, 10, 15, 20, 25 and 30 weight percent, based upon the total weight of the polyimide film. In exemplary embodiments, the corona resistant composite filler is present in an amount in a range of from 5 to 30, 5 to 25, or 5 to 20 weight percent, based upon the total weight of the polyimide film.

In exemplary embodiments, the corona resistant composite filler can have a median particle size of from 0.1 to 5 µm, wherein at least 80, 85, 90, 92, 94, 95, 96, 98, 99 or 100 percent of the dispersed corona resistant composite filler is within the above defined size range. Median particle size can be measured using a Horiba LA-930 particle size analyzer (Horiba Instruments, Inc., Irvine, CA). DMAc can be used as the carrier fluid. In some embodiments, the corona resistant composite filler is a nanofiller. The term "nanofiller" is intended to mean a filler with at least one dimension less than 1000 nanometers (nm) or less than 1 µm.

In exemplary embodiments, the polyimide film additionally includes a dispersing agent. In some embodiments, the polyimide film additionally includes a dispersing agent in an amount in a range of from 1 to 100 weight percent based on the weight of the inorganic ceramic oxide component. In some exemplary embodiments, the dispersing agent is selected from the group consisting of phosphated polyethers, phosphated polyesters, and mixtures thereof. In another exemplary embodiment, the dispersing agent is an alkylolammonium salt of a polyglycol ester. In another embodiment, the dispersing agent is selected from the group consisting of Disperbyk 180, an alkylolammonium salt of a polyglycol ester, Disperbyk 111, a phosphated polyester, Byk W-9010, a phosphated polyester or mixtures there of (all available from Byk-Chemie GmBH, Wesel, Germany). In another exemplary embodiment, the dispersing agent is Solplus D540, a phosphated ethylene oxide/propylene oxide copolymer available from Lubrizol, Inc., Cleveland, OH. In yet another exemplary embodiment, the dispersing agent is a mixture of any of the above dispersing agents. In some exemplary embodiments, the dispersing agent is an aromatic polyamic acid or aromatic polyimide. In another embodiment the dispersing agent is a polyalkylene ether such as polytetramethylene glycol and polyethylene glycol. Typically, aromatic polyamic acid or aromatic polyimide have high temperature stability and thus mostly would remain in the polyimide. Whereas dispersing agents such as polyalkylene ethers have a low temperature stability and would mostly decompose or be burned off at the temperatures used in the imidization process.

### Polyimide Film Production

In exemplary embodiments, a polyimide film can be produced by combining a diamine and a dianhydride (monomer or other polyimide precursor form) together with a solvent to form a polyamic acid (also called a polyamide acid) solution. The dianhydride and diamine can be combined in a molar ratio of about 0.90 to 1.10. The molecular weight of the polyamic acid formed therefrom can be adjusted by adjusting the molar ratio of the dianhydride and diamine.

In exemplary embodiments, a polyamic acid casting solution is derived from the polyamic acid solution. The polyamic acid casting solution, and/or the polyamic acid solution, are combined with conversion chemicals like: (i) one or more dehydrating agents, such as, aliphatic acid anhydrides (acetic anhydride, *etc.*) and/or aromatic acid anhydrides; and (ii) one or more catalysts, such as, aliphatic tertiary amines (triethyl amine, *etc.*), aromatic tertiary amines (dimethyl aniline, *etc.*) and heterocyclic tertiary amines (pyridine, picoline, isoquinoline, *etc.*). The anhydride dehydrating material is often used in molar excess compared to the amount of amide acid groups in the polyamic acid. The amount of acetic anhydride used is typically about 2.0 to 4.0 moles per equivalent (repeat unit) of polyamic acid. Generally, a comparable amount of tertiary amine catalyst is used. Fillers, dispersed or suspended in solvent as described above, are then added to the polyamic acid solution.

In exemplary embodiments, the polyamic acid solution is dissolved in an organic solvent at a concentration from about 5.0 or 10 percent to 15, 20, 25, 30, 35 or 40 percent by weight. In exemplary embodiments, a slurry comprising a filler is prepared, where the slurry has a solids content in a range of from 0.1 to 70, from 0.5 to 60, from 1 to 55, from 5 to 50, or from 10 to 45 percent by weight. The slurries may or may not be milled using a ball mill to reach the desired particle size. The slurries may or may not be filtered to remove any residual large particles. A polyamic acid solution can be made by methods well known in the art. The polyamic acid solution may or may not be filtered. In some embodiments, the solution is mixed in a high shear mixer with the filler slurry. When a polyamic acid solution is made with a slight excess of diamine, additional dianhydride solution may or may not be added to increase the viscosity of the mixture to the desired level for film casting. The amount of the polyamic acid solution, and filler slurry can be adjusted to achieve the desired loading levels in the cured film. In some embodiments, the mixture is cooled below 10°C and mixed with conversion chemicals prior to casting.

The solvated mixture (the polyamic acid casting solution) can then be cast or applied onto a support, such as an endless belt or rotating drum, to give a partially imidized gel film. Alternatively, it can be cast on a polymeric carrier such as PET, other forms of Kapton^{®} polyimide film (*e.g.*, Kapton^{®} HN or Kapton^{®} E films) or other polymeric carriers. The gel film may be stripped from the drum or belt, placed on a tenter frame, and cured in an oven, using convective and radiant heat to remove solvent and complete the imidization to greater than 98% solids level. The film can then be separated from the support, oriented such as by tentering, with continued heating (drying and curing) to provide a substantially chemically converted polyimide film.

Useful methods for producing polyimide films can be found in U.S. Patent No. 5,166,308 and U.S. Patent No. 5,298,331, which are incorporate herein by reference. Numerous variations are also possible, such as:
(a) A method wherein the diamine components and dianhydride components are preliminarily mixed together and then the mixture is added in portions to a solvent while stirring.
(b) A method wherein a solvent is added to a stirring mixture of diamine and dianhydride components, (contrary to (a) above).
(c) A method wherein diamines are exclusively dissolved in a solvent and then dianhydrides are added thereto at such a ratio as allowing to control the reaction rate.
(d) A method wherein the dianhydride components are exclusively dissolved in a solvent and then amine components are added thereto at such a ratio to allow control of the reaction rate.
(e) A method wherein the diamine components and the dianhydride components are separately dissolved in solvents and then these solutions are mixed in a reactor.
(f) A method wherein the polyamic acid with excessive amine component and another polyamic acid with excessive dianhydride component are preliminarily formed and then reacted with each other in a reactor, particularly in such a way as to create a non-random or block copolymer.
(g) A method wherein a specific portion of the amine components and the dianhydride components are first reacted and then the residual diamine components are reacted, or vice versa.
(h) A method wherein the conversion chemicals (catalysts) are mixed with the polyamic acid to form a polyamic acid casting solution and then cast to form a gel film.
(i) A method wherein the components are added in part or in whole in any order to either part or whole of the solvent, also where part or all of any component can be added as a solution in part or all of the solvent.
(j) A method of first reacting one of the dianhydride components with one of the diamine components giving a first polyamic acid. Then reacting another dianhydride component with another amine component to give a second polyamic acid. Then combining the amic acids in any one of a number of ways prior to film formation.

In exemplary embodiments, filler is first dispersed in a solvent to form a slurry. The slurry is then dispersed in the polyamic acid solution. In exemplary embodiments, the concentration of filler to polyimide (in the final film) is in a range of from 10 to 50 vol%, from 15 to 45 vol%, from 15 to 40 vol%, from 20 to 35 vol%, or from 25 to 30 vol%. In exemplary embodiments, the concentration of filler to polyimide (in the final film) is at least 10, at least 15, at least 20, or at least 25 vol%. The composition of the cured film can be calculated from the composition of the components in the mixtures, excluding DMAc solvent (which is removed during curing) and accounting for removal of water during conversion of polyamic acid to polyimide.

In exemplary embodiments, the filled polyamic acid casting solution is a blend of a polyamic acid solution and filler. In this casting solution, the filler is present in a concentration range from 0.1 to 70 vol%, from 1 to 60 vol%, from 2 to 50 vol%, from 5 to 45 vol%, or from 5 to 40 vol%. In exemplary embodiments, the filler is first dispersed in the same polar aprotic solvent used to make the polyamic acid solution (*e.g*., DMAc). Optionally, a small amount of polyamic acid solution may be added to the filler slurry to increase the viscosity of the slurry. Optionally, a dispersant or dispersing agent may be added to aid in dispersion or alter the rheology of the slurry.

The filler may be blended into a particular solvated polymer matrix or polymer matrix precursor by using any commonly used technique such as batch mixing using solvent(s), dry mixing, or continuous mixing using solvent(s). Parameters such as order of raw material addition, mixing speed, shear rate, type of mixing blade (*e.g*., shear blade), mixing time, temperature, and pressure are known to affect the final degree of mixing between the filler and the matrix material.

In exemplary embodiments, blending of the filler slurry with a polyamic acid solution to form the filled polyamic acid casting solution is done using high shear mixing. In such exemplary embodiments, if the filler is present beyond 50 volume percent in the final film, the film can be too brittle and may not be sufficiently flexible to form a freestanding, mechanically tough, flexible sheet.

In exemplary embodiments, the casting solution can further comprise any one of a number of additives, such as processing aids (*e.g*., oligomers), antioxidants, light stabilizers, flame retardant additives, anti-static agents, heat stabilizers, ultraviolet absorbing agents or various reinforcing agents.

In some exemplary embodiments, a coextrusion process can be used to form a multilayer polyimide film with an inner core layer sandwiched between two outer layers. In this process, a finished polyamic acid solution is filtered and pumped to a slot die, where the flow is divided in such a manner as to form the first outer layer and the second outer layer of a three-layer coextruded film. In some embodiments, a second stream of polyimide is filtered, then pumped to a casting die, in such a manner as to form the middle polyimide core layer of a three-layer coextruded film. The flow rates of the solutions can be adjusted to achieve the desired layer thickness.

In some exemplary embodiments, the multilayer film is prepared by simultaneously extruding the first outer layer, the core layer and the second outer layer. In some exemplary embodiments, the layers are extruded through a single or multi-cavity extrusion die. In other exemplary embodiments, the multilayer film is produced using a single-cavity die. If a single-cavity die is used, the laminar flow of the streams should be of high enough viscosity to prevent comingling of the streams and to provide even layering. In some exemplary embodiments, the multilayer film is prepared by casting from the slot die onto a moving stainless-steel belt. In exemplary embodiments, the belt is then passed through a convective oven, to evaporate solvent and partially imidize the polymer, to produce a "green" film. The green film can be stripped off the casting belt and wound up. The green film can then be passed through a tenter oven to produce a fully cured polyimide film. In some exemplary embodiments, during tentering, shrinkage can be minimized by constraining the film along the edges (i.e., using clips or pins).

In exemplary embodiments, the outer layers of the present invention can also be applied to the core layer during an intermediate manufacturing stage of making polyimide film such as to gel film or to green film.

When forming a polyimide film, the term "gel film" refers to a polyamic acid sheet, which is laden with volatiles, primarily solvent, to such an extent that the polyamic acid is in a gel-swollen, or rubbery condition, and may be formed in a chemical conversion process. The volatile content is usually in the range of 70 to 90% by weight and the polymer content usually in the range of 10 to 30% by weight of the gel film. The final film becomes "self-supporting" in the gel film stage. It can be stripped from the support on which it was cast and heated to a final curing temperature. The gel film generally has an amic acid to imide ratio between 10:90 and 50:50, most often 30:70.

The gel film structure can be prepared by the method described in U.S. Patent No. 3,410,826. This patent discloses mixing a chemical converting agent and a catalyst, such as a lower fatty acid anhydride and a tertiary amine, into the polyamic-acid solution at a low temperature. This is followed by casting the polyamic-acid solution in film-form, onto a casting drum. The film is mildly heated after casting, at for example 100°C, to activate the conversion agent and catalyst in order to transform the cast film to a polyamic acid / polyimide gel film.

Another type of polymer film is a "green film" which, for a polyimide film, is partially polyamic acid and partially polyimide, and may be formed in a thermal conversion process. Green film contains generally about 50 to 75% by weight polymer and 25 to 50 % by weight solvent. Generally, it should be sufficiently strong to be substantially self-supporting. Green film can be prepared by casting the polyamic acid solution into film form onto a suitable support such as a casting drum or belt and removing the solvent by mild heating at up to 150°C. A low proportion of amic acid units in the polymer, e.g., up to 25 %, may be converted to imide units.

Application of the polyimide films in exemplary embodiments disclosed herein can be accomplished in any number of ways. Such methods include using a slot die, dip coating, or kiss-roll coating a film followed by metering with doctor knife, doctor rolls, squeeze rolls, or an air knife. The coating may also be applied by brushing or spraying. By using such techniques, it is possible to prepare both one and two-sided coated laminates. In preparation of the two-side coated structures, one can apply the coatings to the two sides of a polymer either simultaneously or consecutively before going to the curing and drying stage of the polymer.

The electrically insulative, corona resistant composite filler (dispersion or colloid thereof) can be added at several points in the polyimide film preparation. In exemplary embodiments, the colloid or dispersion is incorporated into a prepolymer having a Brookfield solution viscosity in the range of about 50-100 poise at 25°C. "Prepolymer" is intended to mean a lower molecular weight polymer, typically made with a small stoichiometric excess (about 2-4%) of diamine monomer (or excess dianhydride monomer). In an alternative embodiment, the colloid or dispersion can be combined with the monomers directly, and in this case, polymerization occurs with the filler present during the reaction. In another embodiment, the colloid or dispersion can be combined with the "finished", high viscosity polyimide. The monomers may have an excess of either monomer (diamine or dianhydride) during this "in situ" polymerization. The monomers may also be added in a 1:1 ratio. In the case where the monomers are added with either the amine (case i) or the dianhydride (case ii) in excess, increasing the molecular weight (and solution viscosity) can be accomplished, if necessary, by adding incremental amounts of additional dianhydride (case i) or diamine (case ii) to approach the 1:1 stoichiometric ratio of dianhydride to amine.

The thickness of the polyimide film may be adjusted, depending on the intended purpose of the film or final application specifications. In exemplary embodiments, the polyimide film has a total thickness in a range of from 2 to 300 µm, from 5 to 200 µm, from 7 to 150 µm, from 10 to 100 µm, or from 15 to 80 µm.

In one embodiment, one or more imidization catalysts are used to produce a single layer polyimide film of 19 µm and containing about 17 weight percent of well-dispersed aluminum oxide.

The polyimide film may have certain desirable properties. Desired properties include (a) an elongation to break in both machine and transverse film directions of 40% or greater, (b) a tensile strength of 20 kpsi or greater, (c) a tensile modulus of 2 GPa or greater, (d) a coefficient of thermal expansion in both machine and transverse film directions of less than 60 ppm/°C, (e) a dielectric strength of 3 kV/mil or greater, (f) a thermal glass transition temperature of 250 °C or greater, (g) a thermal rating of 200 °C or greater, and (h) a residual volatile content (excluding water) of less than 1 wt%. The testing of these properties may occur according to standard procedures known to the industry such as published by ASTM or UL.

### Fluoropolymer Layers

In exemplary embodiments, the polyimide film having an electrically insulative, corona resistant composite filler has a first fluoropolymer layer adhered to a first side of the polyimide. The fluoropolymer layer is used to bond the polyimide film to a metal layer, an enamel layer, or wire, such as a rectangular electrical conductor (*e.g*., rectangular copper wire, *etc.*)*.* Additional fluoropolymer layers may be present, either on the same side as the first fluoropolymer layer or on the opposite side of the polyimide film. In other embodiments, polymers based on silicones, acrylates, epoxies, urethanes, urethane-acrylates or mixtures thereof can be adhered to the polyimide film and serve similar function as the fluoropolymer layer.

In exemplary embodiments, a base film tape includes the polyimide film having a first fluoropolymer layer. In exemplary embodiments, the base film tape can be used as a wrap for an electrically insulated wire or cable including a rectangular electrical conductor (*e.g*., rectangular copper wire, *etc.*)*.* In exemplary embodiments, the base film tape has a thickness in a range of from 25 µm to 40 µm as measured in the unwrapped state.

In exemplary embodiments, fluoropolymer layers comprise fluoropolymers selected from the group consisting of tetrafluoroethylene-hexafluoropropylene copolymer (FEP), perfluoro alkoxy resin (PFA), polytetrafluoroethylene (PTFE) or mixtures thereof. In exemplary embodiments, a fluoropolymer layer comprises FEP in an amount in a range from 65 to 100 weight percent based on the total weight of the fluoropolymer layer. In exemplary embodiments, the fluoropolymer layer comprises FEP in an amount between (and optionally including) any two of the following numbers: 65, 70, 75, 80, 85, 90, 95 and 100 weight percent based on the total weight of the fluoropolymer layer. In exemplary embodiments, the first fluoropolymer layer, the second fluoropolymer layer, or both the first and second fluoropolymer layers are in direct contact with the polyimide film, such that there are no intervening layers between the fluoropolymer layers and the polyimide film. In exemplary embodiments, the fluoropolymer layer comprises 100 weight percent FEP. In exemplary embodiments, the fluoropolymer in the fluoropolymer layer is not crosslinked. In exemplary embodiments, the first fluoropolymer layer and the second fluoropolymer layer are the same or different.

The fluoropolymer layer will generally have a thickness in a range between (and optionally including) any two of the following numbers: 0.25, 0.3, 0.4, 0.5, 0.6, 0.7, 0.8, 0.9, 1.0, 1.25, 1.5, 1.75, 2, 3, 4, 5, 10, 11, 12, 13, 14, 15, 16, 17, 18, 19, 20, 21, 22, 23, 24 and 25 µm. A useful thickness range is oftentimes in a range of from about 5 µm to 15 µm. In practice, the desired thickness can depend upon the specifications, particularly for automotive or heavy-duty traction applications. The thickness of the fluoropolymer layer may impact the strength of adhesion of a polyimide film to an electrical conductor (bare or covered with an insulation material) when the fluoropolymer layer is located between the polyimide film and the electrical conductor.

In some exemplary embodiments, the fluoropolymer layer may be applied to the polyimide film by, but not limited to, solution coating, colloidal dispersion coating, extrusion, or lamination. In one embodiment, the fluoropolymer is either coated or laminated to a polyimide film that has previously been surface modified to improve adhesion.

The polyimide film may have its surface modified to improve adhesion to other layers, such as the fluoropolymer layer. Examples of useful surface modification are, but are not limited to, corona treatment, plasma treatment under atmospheric pressure, plasma treatment under reduced pressure, treatment with coupling agents like silanes and titanates, sandblasting, alkali-treatment, and acid-treatment.

The fluoropolymer layer of the present disclosure may comprise flame retardants and thermally conductive fillers, as well as fillers to tailor opacity, color, and the rheology of the fluoropolymer layer.

In some exemplary embodiments, the fluoropolymer layer may contain an inorganic filler such as silica, alumina, titania, and/or zirconia. The filler may be same or different as the one present in the polyimide film. The filler may be present in a range of from 1 to 10 wt% relative to the dry weight of the coating. If more than one fluoropolymer layer is present on a polyimide film, then each fluoropolymer layer may independently be filled or unfilled.

### Wire Wrap Process

In exemplary embodiments, an electrically insulated film having an electrically insulative, corona resistant composite filler is useful as a wire wrap. Suitable material to be wrapped include bare electrical conductors, electrical conductors covered in enamel, electrical conductors covered with an extruded resin, or electrical conductors covered with film tape. In some exemplary embodiments, the wire wrap may contain additional layers, such as adhesive layers or scrap abrasion resistant layers. Films or sheets of wire wrap can be slit into narrow widths to provide tapes. The particular width of the tape is chosen depending on the dimensions of the electrical conductor to be wrapped. These tapes can be wound around an electrical conductor in spiral fashion or in an overlapped fashion. The amount of tape overlap can vary depending upon the angle of the wrap. In exemplary embodiments, the amount of overlap does not exceed 70%. The tension employed during the wrapping operation can also vary widely, ranging from just enough tension to prevent wrinkling, to a tension high enough to stretch and neck down the tape. Even when the tension is low, a snug wrap is possible since the tape will often shrink under the influence of heat during any ensuing heat-sealing operation. Heat-sealing of the tape can be accomplished by treating the tape-wrapped conductor at a temperature and time sufficient to fuse the bonding layer to the other layers in the composite. The heat-sealing temperature required ranges generally from 240, 250, 275, 300, 325, or 350°C to 375, 400, 425, 450, 475, or 500°C, depending upon the insulation thickness, the gauge of the metal conductor, the speed of the production line, and the length of the sealing. The fluoropolymer layer in the tape is preferentially facing the electrical conductor in cases where there is only one fluoropolymer layer present on the polyimide film. Parameters such as absolute humidity level and temperature of the surrounding atmosphere, line tension, wrap angle, heating and cooling rates as well as the means by which the heat (*e.g*., convective, radiant, or induction) and pressure are applied can influence the performance of the final wire insulation material.

The wrapped electrical conductor may have certain desirable properties. Desired properties include (a) a visual appearance that is free of defects such as blisters or bubbles or wrinkles or lifted tape edges, (b) a thermal class rating of 200 °C or greater when applied on copper, (c) a residual solvent content of 1 wt% or less, (d) a breakdown voltage value of at least 2 kV or more and which is retained to at least 50% of the initial value after elongation of the wrapped conductor by at least 5%, bending, chemical exposure or thermal exposure, (e) no visual damage when bent edgewise or flatwise by a 180° turn around a mandrel having diameter two times the width of the conductor, (f) no visual damage when exposed to at least 200 °C for at least 30 minutes or when additionally first bent flatwise or edgewise or when additionally first elongated to at least 10%, (g) an elongation to break of at least 30%, (h) a loss of adhesion of the insulation material of less than one time the width of the conductor after elongation by at least 20% or when additionally first thermally aged for at least 30 minutes at at least 150 °C, (i) a certain station friction coefficient, (j) a certain partial discharge inception voltage at ambient conditions at a threshold of 20 picocoulomb of 700 V or greater, and (k) a certain abrasion/scrape resistance. The testing of these properties may occur according to standard procedures known to the industry such as IEC 60851, ASTM, or ANSI/NEMA MW 1000.

### Wire Performance Data

Table 1 below includes a comparison of partial discharge inception voltage (PDIV) (the voltage at or above which partial discharge phenomena starts to take place inside the wire insulation) between PAI (polyamide-imide) enamel, PAEK (with glass transition point of approximately 140 °C to 150 °C) with an underlayer of primer (e.g., PAI enamel), and three samples prepared via the double-layer approach disclosed herein. Table 1 also includes a comparison of their temperature dependence. In table 1 below, Vrms is the root-mean-square voltage, OL is the percentage overlap, and RT indicates an ambient temperature in the range of 19 °C to 25 °C.

**TABLE 1**

| **Sample** | **Average Insulation Thickness Per Side [µm]** | **Average PDIV at RT [Vrms]** | **% Decrease in Average PDIV Value [Vrms] at 180 °C** |
|---|---|---|---|
| PAI Enamel | 80 | 782 | -15% |
| PAEK with Primer | 200 | 1290 | -23% |
| Double-Layer at 66% OL | 125 | 1162 | -14% |
| Double-Layer at 53% OL | 123 | 1060 | -15% |
| Double-Layer at 20% OL | 91 | 836 | -11% |

Generally, the results shown in Table 1 above show that the double-layer approach produces average PDIV values similar to existing wire insulation solutions. Moreover, the drop in PDIV value at higher temperature is similar or less severe for the double-layer insulation approach as it is for other existing wire insulation solutions.

Each of the samples in Table 1 includes rectangular copper wire having dimensions of approximately 2 mm × 4 mm with a corner radius of approximately 0.5 mm. The first sample (PAI Enamel) included rectangular copper wire coated with a polyamide-imide (PAI) enamel coating having an average thickness of 80 µm per side. Insulation thicknesses were determined according to IEC 60851-2.

The second sample (PAEK with primer) includes rectangular copper wire first coated with a PAI enamel coating having an average thickness of 40 to 50 µm per side and a subsequent extruded layer of PAEK (with glass transition point of approximately 140 °C to 150 °C) having an average thickness of 160 µm per side. The third, fourth, and fifth samples (double-layer examples) included rectangular copper wire first coated with a PAI enamel coating having an average thickness of 60-65 µm per side, which was then tape wrapped and heat sealed to achieve a total average thickness of 93 µm (20% overlap (OL) or 125 µm (53% or 66% OL) per side. Insulation thicknesses were determined according to IEC 60851-2. The tape used in all double-layer examples was a single layer polyimide film of 20-22 µm thickness (containing monomers ODA and PMDA and about 16-17 weight percent of well-dispersed aluminum oxide), which had been surface treated and subsequently laminated on one side to a single FEP-based polymer film of approximately 11-13 µm thickness. The FEP layer was conductor-facing during the wrapping process.

The testing conditions included determination of the PDIV values according to ASTM D1868 with an AC power supply source, with samples arranged in a "bar-to-bar" wire test configuration, using 20 picocoulomb as a chosen threshold value for PD activity.

Table 2 below includes average PDIV at RT and high temperature (180 °C) and dielectric breakdown values (at RT) of double-layer construction as a function of enamel composition.

**TABLE 2**

| **Sample** | **Average Insulation Thickness Per Side [µm]** | **Average PDIV at RT [Vrms]** | **% Decrease in Average PDIV Value [Vrms] at 180°C** | **Dielectric breakdown voltage [kV] at RT** | **Enamel thermal class rating [°C]** |
|---|---|---|---|---|---|
| Double-Layer (53% OL with PI enamel) | 108 | 984 | -14% | 14.3 | 240 |
| Double-Layer (15% OL with PI enamel) | 75 | 853 | -12% | Not Measured | 240 |
| Double-Layer (53% OL with PAI enamel) | 123 | 1060 | -15% | 13.2 | 220 |
| Double-Layer (20% OL with PAI enamel) | 91 | 836 | -11% | 10.4 | 220 |
| Double-Layer (53% OL with PEI/PAI enamel) | 125 | 1103 | -14% | 20.8 | 200 |

Each of the samples includes rectangular copper wire having dimensions of approximately 2 mm × 4 mm with a corner radius of approximately 0.5 mm. The average thickness of the polyimide (PI) enamel was 40-45 µm per side, the average thickness of PAI enamels was 60-65 µm per side, and the average thickness of the polyester-imide/polyamide-imide (PEI/PAI) enamel was 60-65 µm per side. Each rectangular copper wire with enamel coated thereon was then tape wrapped with the indicated percentage overlap (% OL) and heat sealed. Insulation thicknesses were determined according to IEC 60851-2.

The testing conditions included determination of the average PDIV values according to ASTM D1868 with an AC power supply source, with samples arranged in a "bar-to-bar" wire test configuration, using 20 picocoulomb as a threshold value for PD activity. Dielectric breakdown values were determined according to IEC60851-5, and steel ball bath was used.

Table 3 below includes a comparison of average endurance lifetime between enamel, PAEK with primer, and the double-layer approach of this application.

**TABLE 3**

| **Sample** | **Average Insulation Thickness Per Side [µm]** | **Average Voltage Endurance Lifetime [hours]** |
|---|---|---|
| PAI Enamel | 80 | 0.42 |
| PEEK + PAI enamel | 200 | 0.60 |
| Double-Layer (53% OL) | 123 | 56.5 |
| Double-Layer (20% OL) | 91 | 0.73 |

Each of the samples includes rectangular copper wire having dimensions of approximately 2 mm × 4 mm with a corner radius of approximately 0.5 mm. The average thickness of the PAI enamel was 80 µm per side in the first sample. For the second sample (PAEK with primer), the first PAI enamel primer layer was on average 40 to 50 µm thick per side and the top extruded layer of PAEK (with glass transition point of approximately 140 °C to 150 °C) was on average 160 µm thick per side. The third and fourth samples (double-layer) included polyamide-imide enamel having an average thickness of 60-65 µm per side, which samples were then tape wrapped to achieve a total average thickness of 123 µm (53% OL) or 91 µm (20% OL) per side after heat sealing. Insulation thicknesses were determined according to IEC 60851-2.

The testing conditions includes a bipolar square-wave pulse endurance tester with applied voltage of 1.5 kV peak to peak at 180 °C, a frequency of 20 kHz, voltage rise time 14 ns, and time to peak voltage 50 ns.

Table 4 below includes average endurance lifetime of double-layer construction as a function of enamel composition.

**TABLE 4**

| **Sample** | **Average Insulation Thickness Per Side [µm]** | **Average Voltage Endurance Lifetime [hours]** |
|---|---|---|
| Double-Layer (53% OL with PI enamel) | 108 | 5.9 |
| Double-Layer (15% OL with PI enamel) | 75 | 0.67 |
| Double-Layer (53% OL with PAI enamel) | 123 | 56.5 |
| Double-Layer (20% OL with PAI enamel) | 91 | 0.73 |
| Double-Layer (53% OL with PEI/PAI enamel) | 125 | >110 |

Each of the samples includes rectangular copper wire having dimensions of approximately 2 mm × 4 mm with a corner radius of approximately 0.5 mm. The average thickness of the PI enamel was 40-45 µm per side in the first and second samples. The average thickness of the PAI enamel was 60-65 µm per side in the third and fourth samples. The average thickness of the PEI/PAI enamel was 60-65 µm per side in the fifth sample. Each wire was tape wrapped to achieve overall total average thicknesses and overlap percentage (% OL) and heat sealed. Insulation thicknesses were determined according to IEC 60851-2.

The testing conditions includes a bipolar square-wave pulse endurance tester with applied voltage of 1.5 kV peak to peak at 180 °C, a frequency of 20 kHz, voltage rise time 14 ns, and time to peak voltage 50 ns.

### Adhesion and Elongation at Fracture Test

Wire samples were subjected to an adhesion and elongation test as per IEC 60851-3.

Elongation at fracture test: For wire samples with bare copper wire of approximate dimensions of 2 mm × 4 mm, a corner radius of approximately 0.5 mm, a PAI enamel layer of 60 µm average thickness per side, and a tape overlap in the range of 20-66%, an elongation at fracture greater than 30% was observed. Insulation thicknesses were determined according to IEC 60851-2.

Adhesion test: For the same wire samples with a tape overlap in the range of 20-66%, the length along the wire across which loss of adhesion had occurred after elongating an individual wire sample to 20% was <1 mm in the case of <50% OL and was <2 mm in the case of 66% OL.

### Adhesion Testing After Thermal Aging

Wire samples were subjected continuously to 180 °C for 168 hours in a convection oven, and then the adhesion behavior evaluated as per IEC 60851-3.

For wire samples with bare copper wire dimensions of approximately 2 mm × 4 mm, a corner radius of approximately 0.5 mm, a PAI enamel layer of 60 µm average thickness per side and with a tape overlap of 53%, the length along the wire across which loss of adhesion had occurred after elongating the sample to 20% was <2 mm. Insulation thicknesses were determined according to IEC 60851-2.

### Bend Test

Wire samples having a PAI enamel layer of 60 µm average thickness and a tape overlap in the range of 20-53% were subjected to a 180° turn bend around a mandrel with diameter 2x width of conductor (as per IEC 60851-3.5). The bend was performed either edgewise or flatwise in separate instances. No exposed conductor material was visually observed on the wire samples in the areas subjected to the bending process. Insulation thicknesses were determined according to IEC 60851-2.

Exemplary embodiments disclosed herein are not limited to use with only electric motors of electric vehicles. Exemplary embodiments disclosed herein may be used with a wide range of electronic devices, including power electronics devices for aircraft, marine, industrial, automotive, *etc.,* electric motors driven by pulse width modulated inverters, high switching frequency converters providing signals with high levels of dv/dt, traction motors for e-mobility applications, other windings driven by converter devices, *etc.*

Disclosed herein are exemplary embodiments of electrically insulated conductors and exemplary methods for electrically insulating conductors, such that the resulting electrically insulated conductors are resistant to partial discharge (PD), and thereby suitable for PD resistant design schemes (*e.g.,* 800 V or above electric motors, *etc.*)*.* An exemplary method includes applying an enamel coating along an electrical conductor, wrapping an electrically insulative tape around the fully enameled electrical conductor, and heating sealing the tape-wrapped, enameled electrical conductor to help ensure good adhesion of the electrically insulative tape to the enamel coating. The electrically insulative tape comprises polyimide, an additional polymer adhered to the polyimide, and a sufficient amount of an electrically insulative, corona resistant filler for PD resistance. The tape-wrapped, enameled electrical conductor is resistant to partial discharge (PD), e.g., suitable for use in a stator winding of an 800 volt or above electric motor, *etc.*

In exemplary embodiments, the electrically insulative tape includes about 17 weight percent of the electrically insulative, corona resistant composite filler in the polyimide. For example, the electrically insulative, corona resistant composite filler may comprise aluminum oxide.

In exemplary embodiments, the enamel coating has an average thickness of about 90 micrometers per side or less. For example, the enamel coating may have an average thickness per side within a range from about 30 micrometers to about 80 micrometers.

In exemplary embodiments, the electrically insulative tape is wrapped around the enameled electrical conductor with a tape overlap within a range from about 15 percent to about 70 percent.

In exemplary embodiments, the tape-wrapped, enameled electrical conductor has an overall average thickness less than about 170 micrometers per side as defined by the electrical conductor, the enamel coating, and the electrically insulative tape.

In exemplary embodiments, the electrical conductor has a uniform insulation thickness defined by the enamel coating and the electrically insulative tape and without requiring processing solvents during the tape-wrapping step.

In exemplary embodiments, the enamel coating underneath the electrically insulative tape is configured to provide sufficient electrical insulation for the electrical conductor should the electrically insulative tape delaminate and/or scrape off from the tape-wrapped, enameled electrical conductor.

In exemplary embodiments, the enamel coating comprises: a polyamide-imide (PAI) enamel coating; or a polyimide (PI) enamel coating; or a polyester-imide/polyamide-imide (PEI/PAI) enamel. In such exemplary embodiments, an exemplary method includes applying a polyamide-imide (PAI) enamel coating along the electrical conductor; or applying a polyimide (PI) enamel coating along the electrical conductor; or applying a polyester-imide/polyamide-imide (PEI/PAI) enamel coating along the electrical conductor.

In exemplary embodiments, the electrical conductor comprises a copper, aluminum, or stainless steel wire having a generally rectangular cross-sectional shape with rounded corners. In such exemplary embodiments, an exemplary method includes applying a polyamide-imide (PAI) enamel coating along the copper, aluminum, or stainless steel wire such that the PAI enamel coating has an average thickness within a range from about 60 micrometers to about 65 micrometers per side; wrapping the electrically insulative tape around the enameled electrical conductor comprises wrapping the electrically insulative tape around the PAI enameled copper, aluminum, or stainless steel wire such that: the tape overlap is about 66 percent and the average insulation thickness is about 125 micrometers per side as defined by the PAI enamel coating and the electrically insulative tape; or the tape overlap is about 53 percent and the average insulation thickness is about 123 micrometers per side as defined by the PAI enamel coating and the electrically insulative tape; or the tape overlap is about 20 percent and the average insulation thickness is about 91 micrometers per side as defined by the PAI enamel coating and the electrically insulative tape.

In exemplary embodiments, the electrical conductor comprises a copper, aluminum, or stainless steel wire having a generally rectangular cross-sectional shape with rounded corners. In such exemplary embodiments, an exemplary method includes applying the enamel coating along the electrical conductor comprises applying a polyimide (PI) enamel coating along the copper, aluminum, or stainless steel wire such that the PI enamel coating has an average thickness within a range from about 40 micrometers to about 45 micrometers per side; and wrapping the electrically insulative tape around the enameled electrical conductor comprises wrapping the electrically insulative tape around the PI enameled copper, aluminum, or stainless steel wire such that: the tape overlap is about 53 percent and the average insulation thickness is about 108 micrometers per side as defined by the PI enamel coating and the electrically insulative tape; or the tape overlap is about 15 percent and the average insulation thickness is about 75 micrometers per side as defined by the PI enamel coating and the electrically insulative tape.

In exemplary embodiments, the electrical conductor comprises a copper, aluminum, or stainless steel wire having a generally rectangular cross-sectional shape with rounded corners. In such exemplary embodiments, an exemplary method includes applying the enamel coating along the electrical conductor comprises applying a polyester-imide/polyamide-imide (PEI/PAI) enamel coating along the copper, aluminum, or stainless steel wire such that the PEI/PAI enamel coating has an average thickness within a range from about 60 micrometers to about 65 micrometers per side; and wrapping the electrically insulative tape around the enameled electrical conductor comprises wrapping the electrically insulative tape around the PEI/PAI enameled copper, aluminum, or stainless steel wire such that the tape overlap is about 53 percent and the average insulation thickness is about 125 micrometers per side as defined by the PEI/PAI enamel coating and the electrically insulative tape.

In exemplary embodiments, an exemplary method includes applying the enamel coating along the electrical conductor comprises applying a polyamide-imide (PAI) enamel coating along the electrical conductor such that the PAI enamel coating has an average thickness within a range from about 60 micrometers to about 65 micrometers per side; and wrapping the electrically insulative tape around the enameled electrical conductor comprises wrapping the electrically insulative tape around the PAI enameled electrical conductor such that the tape overlap is within a range from about 20 percent to about 66 percent and the insulation average thickness is within a range from about 91 micrometers to about 125 micrometers per side as defined by the PAI enamel coating and the electrically insulative tape.

In exemplary embodiments, an exemplary method includes applying the enamel coating along the electrical conductor comprises applying a polyimide (PI) enamel coating along the electrical conductor such that the PI enamel coating has an average thickness within a range from about 40 micrometers to about 45 micrometers per side; and wrapping the electrically insulative tape around the enameled electrical conductor comprises wrapping the electrically insulative tape around the PI enameled electrical conductor such that the tape overlap is within a range from about 15 percent to about 53 percent and the insulation average thickness is within a range from about 75 micrometers to about 108 micrometers per side as defined by the PI enamel coating and the electrically insulative tape.

In exemplary embodiments, an exemplary method includes applying the enamel coating along the electrical conductor comprises applying a polyester-imide/polyamide-imide (PEI/PAI) enamel coating along the electrical conductor such that the PEI/PAI enamel coating has an average thickness within a range from about 50 micrometers to about 70 micrometers per side; and wrapping the electrically insulative tape around the enameled electrical conductor comprises wrapping the electrically insulative tape around the PEI/PAI enameled electrical conductor such that the tape overlap is within a range from about 15 percent to about 70 percent and the tape-wrapped, PEI/PAI enameled electrical conductor has an overall thickness less than about 170 micrometers per side.

In exemplary embodiments, an exemplary method includes applying the enamel coating along the electrical conductor comprises applying a polyamide-imide (PAI) enamel coating along the electrical conductor such that the PAI enamel coating has an average thickness within a range from about 50 micrometers to about 70 micrometers per side; and wrapping the electrically insulative tape around the enameled electrical conductor comprises wrapping the electrically insulative tape around the PAI enameled electrical conductor such that the tape overlap is within a range from about 15 percent to about 70 percent and the tape-wrapped, PAI enameled electrical conductor has an overall thickness less than about 170 micrometers per side.

In exemplary embodiments, an exemplary method includes applying the enamel coating along the electrical conductor comprises applying a polyimide (PI) enamel coating along the electrical conductor such that the PI enamel coating has an average thickness within a range from about 50 micrometers to about 70 micrometers per side; and wrapping the electrically insulative tape around the enameled electrical conductor comprises wrapping the electrically insulative tape around the PI enameled electrical conductor such that the tape overlap is within a range from about 15 percent to about 70 percent and the tape-wrapped, PI enameled electrical conductor has an overall thickness less than about 170 micrometers per side.

In exemplary embodiments, the enamel coating along the electrical conductor comprises a polyamide-imide (PAI) enamel coating that comprises 4,4'-methylenedianiline and trimellitic anhydride.

In exemplary embodiments, the electrically insulative tape comprises a polyimide film that comprises pyromellitic dianhydride (PMDA) and 4,4'-diaminodiphenylether (ODA).

In exemplary embodiments, the electrically insulative tape includes about 10 to 25 weight percent of the electrically insulative, corona resistant composite filler in the polyimide. The electrically insulative tape has a thickness less than 30 micrometers not including the additional polymer adhered to the polyimide. In such exemplary embodiments, an exemplary method includes applying the enamel coating along the electrical conductor comprises applying a polyamide-imide (PAI) enamel coating along the electrical conductor such that the PAI enamel coating has an average thickness within a range from about 30 micrometers to about 80 micrometers per side; and wrapping the electrically insulative tape around the enameled electrical conductor comprises wrapping the electrically insulative tape around the PAI enameled electrical conductor such that the tape overlap is within a range from about 15 percent to about 70 percent and the tape-wrapped, PAI enameled electrical conductor has an overall thickness less than about 170 micrometers per side. The PAI enamel coating may comprise 4,4'-methylenedianiline and trimellitic anhydride. And the electrically insulative tape may comprise a polyimide film that comprises pyromellitic dianhydride (PMDA) and 4,4'-diaminodiphenylether (ODA).

In exemplary embodiments, the tape-wrapped, enameled electrical conductor is configured such that the tape-wrapped enameled electrical conductor has one or more of: (a) a visual appearance that is free of defects such as blisters or bubbles or wrinkles or lifted tape edges; (b) a thermal class rating of 200 °C or greater when applied on copper; (c) a residual solvent content of 1 wt% or less; (d) a breakdown voltage value of at least 2 kV or more and which is retained to at least 50% of the initial value after elongation of the wrapped conductor by at least 5%, bending, chemical exposure, or thermal exposure; (e) no visual damage when bent edgewise or flatwise by a 180° turn around a mandrel having diameter two times the width of the conductor; (f) no visual damage when exposed to at least 200 °C for at least 30 minutes or when additionally first bent flatwise or edgewise or when additionally first elongated to at least 10%; (g) an elongation to break of at least 30%; (h) a loss of adhesion of the insulation material of less than one time the width of the conductor after elongation by at least 20% or when additionally first thermally aged for at least 30 minutes at at least 150 °C; (i) a certain station friction coefficient; (j) a certain partial discharge inception voltage at ambient conditions at a threshold of 20 picocoulomb of 700 V or greater; and/or (k) a certain abrasion/scrape resistance.

In exemplary embodiments, the enameled electrical conductor before tape wrapping is configured such that the enameled electrical conductor has one or more of: (a) a visual appearance of the enamel that is free of defects such as blisters or bubbles; (b) a thermal class rating of 200 °C or greater when the enamel is applied on copper; (c) a residual solvent content of 5 wt% or less; (d) a breakdown voltage value of at least 2 kV or more and which is retained to at least 50% of the initial value after elongation of the conductor by at least 5%, bending, chemical exposure, or thermal exposure; (e) no visual cracking when bent edgewise or flatwise by a 180° turn around a mandrel having diameter two times the width of the conductor; (f) no visual cracking when exposed to at least 200 °C for at least 30 minutes or when additionally first bent flatwise or edgewise or when additionally first elongated to at least 10%; (g) an elongation to break of at least 30%; (h) a loss of adhesion of the enamel of less than one time the width of the conductor after elongation by at least 20% or when additionally first thermally aged for at least 30 minutes at at least 150 °C; (i) a certain static friction coefficient; (j) a certain partial discharge inception voltage at ambient conditions at a threshold of 20 picocoulomb of 700 V or greater; and (k) a certain abrasion/scrape resistance.

In exemplary embodiments, the electrically insulative tape comprises a polyimide film configured such that the polyimide film has one or more of: (a) an elongation to break in both machine and transverse film directions of 40% or greater; (b) a tensile strength of 20 kpsi or greater; (c) a tensile modulus of 2 GPa or greater; (d) a coefficient of thermal expansion in both machine and transverse film directions of less than 60 ppm/°C; (e) a dielectric strength of 3 kV/mil or greater; (f) a thermal glass transition temperature of 250 °C or greater; (g) a thermal rating of 200 °C or greater; and (h) a residual volatile content (excluding water) of less than 1 wt%.

In exemplary embodiments, the electrical conductor comprises a magnet wire and/or a copper, aluminum, or stainless steel wire having a generally rectangular, round, oval, rhomboid, hollow, or rounded rectangular cross-sectional shape.

In exemplary embodiments, the electrical conductor comprises a copper, aluminum, or stainless steel wire having a generally rectangular cross-sectional shape with rounded corners; and/or the electrical conductor has a generally rectangular cross-sectional shape with dimensions of approximately 1 to 6 millimeters by 1.5 to 20 millimeters with corner radii of 1 millimeter or less, or dimensions of approximately 1 to 20 millimeters by 20 to 200 millimeters with corner radii of 0.1 to 3 millimeters.

In exemplary embodiments, an exemplary method includes curing the enamel coating before wrapping the electrically insulative tape around the enameled electrical conductor.

In exemplary embodiments, the tape-wrapped, enameled electrical conductor is suitable for use in a stator winding for an 800 volt or above electric motor.

In exemplary embodiments, a stator winding for an 800 volt or above electric motor comprises a tape-wrapped, enameled electrical conductor as disclosed herein.

Example embodiments are provided so that this disclosure will be thorough and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. In addition, advantages and improvements that may be achieved with one or more exemplary embodiments of the present disclosure are provided for purpose of illustration only and do not limit the scope of the present disclosure, as exemplary embodiments disclosed herein may provide all or none of the above mentioned advantages and improvements and still fall within the scope of the present disclosure.

Specific numerical dimensions and values, specific materials, and/or specific shapes disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (the disclosure of a first value and a second value for a given parameter may be interpreted as disclosing that any value between the first and second values could also be employed for the given parameter). For example, if Parameter X is exemplified herein to have value A and also exemplified to have value Z, it is envisioned that parameter X may have a range of values from about A to about Z. Similarly, it is envisioned that disclosure of two or more ranges of values for a parameter (whether such ranges are nested, overlapping, or distinct) subsume all possible combination of ranges for the value that might be claimed using endpoints of the disclosed ranges. For example, if parameter X is exemplified herein to have values in the range of 1 - 10, or 2 - 9, or 3 - 8, it is also envisioned that Parameter X may have other ranges of values including 1 - 9, 1 - 8, 1 - 3, 1 - 2, 2 - 10, 2 - 8, 2 - 3, 3 - 10, and 3 - 9.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "includes," "including," "has," "have," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected, or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (*e.g*., "between" versus "directly between," "adjacent" versus "directly adjacent," *etc.*)*.* As used herein, the term "and/or" includes any and all combinations of one or more of the associated listed items.

The term "about" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates at least variations that may arise from ordinary methods of measuring or using such parameters. For example, the terms "generally", "about", and "substantially" may be used herein to mean within manufacturing tolerances. Or for example, the term "about" as used herein when modifying a quantity of an ingredient or reactant of the invention or employed refers to variation in the numerical quantity that can happen through typical measuring and handling procedures used, for example, when making concentrates or solutions in the real world through inadvertent error in these procedures; through differences in the manufacture, source, or purity of the ingredients employed to make the compositions or carry out the methods; and the like. The term "about" also encompasses amounts that differ due to different equilibrium conditions for a composition resulting from a particular initial mixture. Whether or not modified by the term "about", the claims include equivalents to the quantities.

Although the terms first, second, third, *etc.* may be used herein to describe various elements, components, regions, layers and/or sections, these elements, components, regions, layers and/or sections should not be limited by these terms. These terms may be only used to distinguish one element, component, region, layer or section from another region, layer, or section. Terms such as "first," "second," and other numerical terms when used herein do not imply a sequence or order unless clearly indicated by the context. Thus, a first element, component, region, layer, or section could be termed a second element, component, region, layer, or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" may encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements, intended or stated uses, or features of a particular embodiment are generally not limited to that particular embodiment, but, where applicable, are interchangeable and may be used in a selected embodiment, even if not specifically shown or described. The same may also be varied in many ways. Such variations are not to be regarded as a departure from the disclosure, and all such modifications are intended to be included within the scope of the disclosure.

## Claims

1. A method for electrically insulating a conductor such that the resulting electrically insulated conductor is resistant to partial discharge (PD), the method comprising:
applying an enamel coating along an electrical conductor;
wrapping an electrically insulative tape around the enameled electrical conductor, the electrically insulative tape comprising polyimide, an additional polymer adhered to the polyimide, and a sufficient amount of an electrically insulative, corona resistant filler for PD resistance; and
heating sealing the tape-wrapped, enameled electrical conductor to help ensure good adhesion of the electrically insulative tape to the enamel coating;
whereby the tape-wrapped, enameled electrical conductor is resistant to partial discharge (PD).

2. The method of claim 1, wherein:
the electrically insulative tape includes about 17 weight percent of the electrically insulative, corona resistant composite filler in the polyimide; and/or
the electrically insulative, corona resistant composite filler comprises aluminum oxide; and/or
the enamel coating along the electrical conductor comprises a polyamide-imide (PAI) enamel coating that comprises 4,4'-methylenedianiline and trimellitic anhydride; and/or
the electrically insulative tape comprises a polyimide film that comprises pyromellitic dianhydride (PMDA) and 4,4'-diaminodiphenylether (ODA).

3. The method of any one of the preceding claims, wherein:
the method includes wrapping the electrically insulative tape around the enameled electrical conductor with a tape overlap within a range from about 15 percent to about 70 percent;
the tape-wrapped, enameled electrical conductor has an overall average thickness less than about 170 micrometers per side as defined by the electrical conductor, the enamel coating, and the electrically insulative tape; and
the enamel coating has an average thickness of about 90 micrometers per side or less.

4. The method of any one of the preceding claims, wherein:
the method provides the electrical conductor with a uniform insulation thickness defined by the enamel coating and the electrically insulative tape and without requiring processing solvents during the tape-wrapping step;
the method includes curing the enamel coating before wrapping the electrically insulative tape around the enameled electrical conductor; and
the enamel coating underneath the electrically insulative tape is configured to provide sufficient electrical insulation for the electrical conductor should the electrically insulative tape delaminate and/or scrape off from the tape-wrapped, enameled electrical conductor.

5. The method of any one of the preceding claims, wherein the electrical conductor comprises a copper, aluminum, or stainless steel wire having a generally rectangular cross-sectional shape with rounded corners, and wherein applying the enamel coating along the electrical conductor comprises:
applying a polyamide-imide (PAI) enamel coating along the copper, aluminum, or stainless steel wire; or
applying a polyimide (PI) enamel coating along the copper, aluminum, or stainless steel wire; or
applying a polyester-imide/polyamide-imide (PEI/PAI) enamel coating along the copper, aluminum, or stainless steel wire.

6. The method of any one of claims 1 to 4, wherein the method includes applying a polyamide-imide (PAI) enamel coating along the electrical conductor and wrapping the electrically insulative tape around the PAI enameled electrical conductor such that:
the PAI enamel coating has an average thickness within a range from about 60 micrometers to about 65 micrometers per side, the tape overlap is within a range from about 20 percent to about 66 percent, and the insulation average thickness is within a range from about 91 micrometers to about 125 micrometers per side as defined by the PAI enamel coating and the electrically insulative tape; or
the PAI enamel coating has an average thickness within a range from about 50 micrometers to about 70 micrometers per side, and the tape overlap is within a range from about 15 percent to about 70 percent and the tape-wrapped, PAI enameled electrical conductor has an overall thickness less than about 170 micrometers per side.

7. The method of any one of claims 1 to 4, wherein:
applying the enamel coating along the electrical conductor comprises applying a polyimide (PI) enamel coating along the electrical conductor such that the PI enamel coating has an average thickness within a range from about 40 micrometers to about 45 micrometers per side; and
wrapping the electrically insulative tape around the enameled electrical conductor comprises wrapping the electrically insulative tape around the PI enameled electrical conductor such that the tape overlap is within a range from about 15 percent to about 53 percent and the insulation average thickness is within a range from about 75 micrometers to about 108 micrometers per side as defined by the PI enamel coating and the electrically insulative tape.

8. The method of any one of claims 1 to 4, wherein:
applying the enamel coating along the electrical conductor comprises applying a polyester-imide/polyamide-imide (PEI/PAI) enamel coating or a polyimide (PI) enamel coating along the electrical conductor such that the enamel coating has an average thickness within a range from about 50 micrometers to about 70 micrometers per side; and
wrapping the electrically insulative tape around the enameled electrical conductor comprises wrapping the electrically insulative tape around the enameled electrical conductor such that the tape overlap is within a range from about 15 percent to about 70 percent and the tape-wrapped, enameled electrical conductor has an overall thickness less than about 170 micrometers per side.

9. The method of any one of claims 1 to 4, wherein:
the electrically insulative tape includes about 10 to 25 weight percent of the electrically insulative, corona resistant composite filler in the polyimide;
the electrically insulative tape has a thickness less than 30 micrometers;
applying the enamel coating along the electrical conductor comprises applying a polyamide-imide (PAI) enamel coating along the electrical conductor such that the PAI enamel coating has an average thickness within a range from about 30 micrometers to about 80 micrometers per side; and
wrapping the electrically insulative tape around the enameled electrical conductor comprises wrapping the electrically insulative tape around the PAI enameled electrical conductor such that the tape overlap is within a range from about 15 percent to about 70 percent and the tape-wrapped, PAI enameled electrical conductor has an overall thickness less than about 170 micrometers per side.

10. An electrically insulated conductor comprising:
an electrically conductive core;
an enamel coating along the electrically conductive core; and
an electrically insulative tape wrapped around the enameled electrically conductive core, the electrically insulative tape comprising polyimide, an additional polymer adhered to the polyimide, and a sufficient amount of an electrically insulative, corona resistant filler for partial discharge (PD) resistance;
whereby the tape-wrapped, enameled electrically conductive core is resistant to partial discharge (PD).

11. The electrically insulated conductor of claim 10, wherein:
the electrically insulative tape includes about 17 weight percent of the electrically insulative, corona resistant composite filler in the polyimide; and/or
the electrically insulative, corona resistant composite filler comprises aluminum oxide; and/or
the enamel coating along the electrically conductive core comprises a polyamide-imide (PAI) enamel coating that comprises 4,4'-methylenedianiline and trimellitic anhydride; and/or
the electrically insulative tape comprises a polyimide film that comprises pyromellitic dianhydride (PMDA) and 4,4'-diaminodiphenylether (ODA).

12. The electrically insulated conductor of claim 10 or 11, wherein:
the electrically insulative tape is wrapped around the enameled electrically conductive core with a tape overlap within a range from about 15 percent to about 70 percent;
the electrically insulated conductor has an overall thickness less than about 170 micrometers per side as defined by the electrically conductor core, the enamel coating, and the electrically insulative tape; and
the enamel coating has an average thickness of about 90 micrometers per side or less.

13. The electrically insulated conductor of any one of claims 10 to 12, wherein:
the enamel coating is cured;
the electrically insulated tape is wrapped around the cured enameled electrically conductive core and heat sealed to help ensure good adhesion of the electrically insulative tape to the cured enamel coating; and
the enamel coating underneath the electrically insulative tape is configured to provide sufficient electrical insulation for the electrically conductive core should the electrically insulative tape delaminate and/or scrape off from the tape-wrapped, enameled electrically conductive core.

14. The electrically insulated conductor of any one of claims 10 to 13, wherein the electrically conductive core comprises a copper, aluminum, or stainless steel wire having a generally rectangular cross-sectional shape with rounded corners, and wherein the enamel coating comprises:
a polyamide-imide (PAI) enamel coating along the copper, aluminum, or stainless steel wire; or
a polyimide (PI) enamel coating along the copper, aluminum, or stainless steel wire; or
a polyester-imide/polyamide-imide (PEI/PAI) enamel along the copper, aluminum, or stainless steel wire.

15. The electrically insulated conductor of any one of claims 10 to 14:
the electrically insulative tape includes about 10 to 25 weight percent of the electrically insulative, corona resistant composite filler in the polyimide;
the electrically insulative tape has a thickness less than 30 micrometers not including the additional polymer adhered to the polyimide;
the enamel coating comprises a polyamide-imide (PAI) enamel coating along the electrically conductive core such that the PAI enamel coating has an average thickness within a range from about 30 micrometers to about 80 micrometers per side; and
the electrically insulative tape is wrapped around the PAI enameled electrically conductive core such that the tape overlap is within a range from about 15 percent to about 70 percent and the tape-wrapped, PAI enameled electrically conductive core has an overall average thickness less than about 170 micrometers per side.
